# EUROPÄISCHE PATENTANMELDUNG

(11) **EP 4 711 768 A1**
(43) Veröffentlichungstag der Anmeldung: **18.03.2026**
(21) Anmeldenummer: 25201562.3
(22) Anmeldetag: 11.09.2025
(51) Int. Cl.: G01N 35/00, B25J 9/16

(54) **ÜBERGABESTATION FÜR EINE LABORANLAGE ZUR AUTOMATISIERTEN LABORMEDIZINISCHEN PROBENANALYSE**

(30) Priorität: 13.09.2024 DE 202024105276 U; 29.04.2025 DE 102025116509
(71) Anmelder: LabMatic Automation GmbH, 31515 Wunstorf (DE)
(72) Erfinder: Lange, Mario, 31515 Wunstorf (DE)
(74) Vertreter: Werner, André

(57) **Zusammenfassung**

Die Erfindung betrifft eine Übergabestation für eine Laboranlage zur automatisierten labormedizinischen Probenanalyse, die eine kontrollierte Übergabe von Patientenproben zwischen einem Bedienerbereich (2) und einem Schutzbereich (1) der Übergabestation ermöglicht. Das Einschleusen von Patientenproben erfolgt über eine Bedienerkammer (4) im Bedienerbereich (2), aus dem die Patientenproben mittels eines Industrieroboters (21) automatisiert in Prüfproben-Depots (10) innerhalb des Schutzbereichs (1) transferierbar sind. In den Prüfproben-Depots (10) positionierte automatenspezifische Probenhalter (11) dienen als Aufnehmer für die Patientenproben zur automatisierten Überführung in Analyse-Vollautomaten der Laboranlage.

## Beschreibung

Die Erfindung betrifft eine Übergabestation für eine Laboranlage zur automatisierten labormedizinischen Probenanalyse sowie eine Laboranlage mit einer solchen Übergabestation. Die Technologie eignet sich für die automatisierte, sichere und präzise Übergabe, Handhabung und Vorbereitung von Patientenproben in automatisierten Labors.

Im Rahmen der labormedizinischen Untersuchungen kommen zunehmend Analyse-Vollautomaten zum Einsatz, mittels derer bestimmte labormedizinische Tests vollständig automatisiert durchgeführt werden. Das zu untersuchende Probenmaterial wird in geeigneten Probenbehältnissen, zumeist Probenröhrchen, in die Analyse-Vollautomaten eingebracht, in denen Tests ohne physischen menschlichen Eingriff erfolgen. Die Analyse-Vollautomaten sind üblicherweise für spezielle Laboruntersuchungen konzipiert, zum Beispiel für Blutbildanalysen oder für die Analyse der Immunchemie und der klinischen Chemie. Insofern sind in den Labors für labormedizinische Untersuchungen üblicherweise diverse, auf einen spezifischen Testzweck ausgerichtete Analyseautomaten im Einsatz.

Die vorbereitenden Arbeiten, wie zum Beispiel die Probenpräparation und die Bestückung der Analyse-Vollautomaten, erfolgen regelmäßig durch medizinisches Fachpersonal. Ein Teil dieser Laborarbeiten umfasst Routinetätigkeiten, die ebenfalls automatisierbar sind. Die das Probenmaterial enthaltenden Probenbehältnisse können beispielsweise mittels eines gängigen Industrieroboters, d. h. eines Roboters mit einem Greifarm bzw. Manipulator, automatisiert von einer Übergabestation an die jeweiligen Analyse-Vollautomaten übergeben oder - falls erforderlich - zum Zentrifugieren vorbereitet werden.

Ein wichtiges Qualitätskriterium bei der labormedizinischen Probenanalytik ist die lückenlose Rückverfolgbarkeit der Proben. Die Probenbehältnisse sind daher regelmäßig mit einem optisch auslesbaren oder einem elektronischen Datenetikett versehen, zumeist einem Barcode, über den eine eindeutige Zuordnung der jeweiligen Probe zur Probenherkunft, d. h. im Regelfall zum Patienten oder einem Spender, sichergestellt wird. In einem mittels Robotik automatisierten Medizinlabor kann die Probensteuerung durch Auslesen der Datenetiketten erfolgen, zum Beispiel durch Barcodeleser. Ferner können der Gesamtprozess oder auch einzelne Prozessschritte mithilfe von Kameras überwacht und gesteuert werden. Eine solche roboterunterstützte medizintechnische Vorrichtung zur automatischen Probenanalyse ist in DE 10 2021 114 970 A1 beschrieben.

Das zu untersuchende Probenmaterial für die labormedizinische Probenanalytik wird üblicherweise in Form von Patientenproben bereitgestellt. Eine solche Patientenprobe weist gewöhnlich ein Probenbehältnis auf, welches das vom jeweiligen Patienten stammende, meist flüssige Untersuchungsmaterial (zum Beispiel Blut) enthält. Die Probenbehältnisse sind bei Bereitstellung üblicherweise mit einem Verschluss, im Regelfall einer Verschlusskappe, verschlossen. Zudem ist ein Datenetikett am Probenbehältnis angebracht, das Probeninformationen in codierter und/oder nicht codierter Form enthält.

Um menschliche Einflüsse, wie zum Beispiel Kontaminationen oder Störungen der automatisierten Abläufe, im Rahmen der automatisierten Probenanalyse zu unterbinden, besitzen die Laboranlagen zur automatisierten labormedizinischen Probenanalyse einen zugangs- und zugriffsbeschränkten, gewöhnlich abgeschlossenen Prüfbereich, innerhalb dessen die automatisierte Handhabung der zu Analysezwecken geöffneten Patientenproben, insbesondere das Einbringen in und das Ausbringen aus den Analyse-Vollautomaten, stattfindet. D. h., im Prüfbereich der Laboranlage sind während der Probenanalysen keine Personen anwesend; die Probenanalysen erfolgen in diesem Prüfbereich vollautomatisiert.

Zum kontrollierten Einschleusen der Patientenproben in den zugangs- und zugriffsbeschränkten Prüfbereich dient eine Übergabestation der Laboranlage. Das Einschleusen der zu untersuchenden Patientenproben in die Laboranlage erfolgt durch Laborpersonal, üblicherweise medizinisches Fachpersonal. Mittels der Übergabestation wird die sichere und effiziente Übergabe von Patientenproben in den Prüfbereich der Laboranlage sichergestellt. Die Übergabestation fungiert mithin als Schnittstelle zwischen manuell durchgeführten und automatisierten Prozessschritten und sorgt dafür, dass Proben geordnet und nachvollziehbar in das automatisierte Analysesystem überführt werden.

Die Aufgabe der Erfindung besteht darin, eine Übergabestation für eine Laboranlage zur automatisierten labormedizinischen Probenanalyse bereitzustellen, die eine effiziente, sichere und prozessoptimierte Übergabe von Patientenproben in den Prüfbereich der Laboranlage ermöglicht.

Diese Aufgabe wird durch eine Übergabestation mit den Merkmalen nach Anspruch 1 sowie eine Laboranlage nach Anspruch 12 gelöst. Zweckmäßige Weiterbildungen der Erfindung sind in den Ansprüchen 2 bis 11 aufgeführt.

Die erfindungsgemäße Übergabestation ist bestimmungsgemäß Teil einer Laboranlage zur automatisierten labormedizinischen Probenanalyse und dient zum Einschleusen von Patientenproben in die Laboranlage. Die Laboranlage, für die die Übergabestation bestimmt ist, umfasst mindestens einen Analyse-Vollautomaten zur Untersuchung der Patientenproben sowie mindestens einen Industrieroboter zur Handhabung der Patientenproben. Für die automatisierte labormedizinische Probenanalyse werden die Patientenproben in automatenspezifischen Probenhaltern in die Analyse-Vollautomaten eingebracht, wobei die Probenhalter zur positionsdefinierten Aufnahme einer oder mehrerer Patientenproben ausgebildet sind. Die automatenspezifischen Probenhalter, die in den jeweiligen Analyse-Vollautomaten eingesetzt werden, sind typischerweise herstellerspezifisch ausgebildet und für die Analysezwecke innerhalb des Analyse-Vollautomaten konzipiert bzw. optimiert.

Die in der Laboranlage bestimmungsgemäß zu verarbeitenden und mithin über die Übergabestation in die Laboranlage einzuschleusenden Patientenproben umfassen jeweils ein mit einem Datenetikett versehenes Probenbehältnis, im Regelfall ein im Medizinbereich geläufig verwendetes Probenröhrchen. Das jeweilige Probenbehältnis enthält flüssiges Untersuchungsmaterial eines Patienten, zum Beispiel Blut, und ist bei Bereitstellung mit einem Verschluss, typischerweise einer Verschlusskappe, verschlossen. Die Datenetiketten auf dem Probenbehältnis der Patientenproben enthalten jeweils Informationen zur Patientenprobe, insbesondere Informationen zur eindeutigen Zuordnung zum Patienten. Üblicherweise sind auf den Datenetiketten Barcodes, QR-Codes oder ähnliche, optisch lesbare Codierungen aufgebracht. Diese codierten oder nicht codierten Informationen auf dem Datenetikett werden nachfolgend als Probeninformationen bezeichnet.

Die Übergabestation umfasst einen zugangs- und zugriffsbeschränkten Schutzbereich, der Teil eines zugangs- und zugriffsbeschränkten Prüfbereichs der Laboranlage ist, sowie einen angrenzenden Bedienerbereich, in dem das Laborpersonal arbeitet bzw. tätig ist und über den das Laborpersonal die Patientenproben manuell in die Laboranlage einschleust. Die Seite des Schutzbereichs der Übergabestation wird auch als Schutzbereichsseite und die Seite des Bedienerbereichs der Übergabestation als Bedienerseite bezeichnet.

Die Übergabestation ist erfindungsgemäß als Labormöbel konzipiert und besitzt eine verkleidete Trägerstruktur, die im Bedienerbereich eine umhauste Bedienerkammer ausbildet. Die Bedienerkammer verfügt über eine durch ein Lichtgitter überwachte Eingriffsöffnung zum manuellen Einschleusen der Patientenproben sowie eine Durchtrittsöffnung, die zum Schutzbereich der Übergabestation führt. Innerhalb der Bedienerkammer ist mindestens ein Probeneingabe-Depot angeordnet, das mehrere Probenaufnahmen zur Aufnahme der eingeschleusten Patientenproben enthält. Das Probeneingabe-Depot ist üblicherweise als Palette mit matrixartig angeordneten Aussparungen, die als Probenaufnahmen dienen, ausgebildet. Im Regelbetrieb bestückt das Laborpersonal das Probeneingabe-Depot mit den Patientenproben. Das Lichtgitter in der Eingriffsöffnung, das auch als Sicherheits-Lichtvorhang bezeichnet wird, löst bei manuellem Eingriff in den Eingriffsbereich ein Signal aus bzw. registriert den manuellen Eingriff.

Im Schutzbereich besitzt die Übergabestation ein oder mehrere Prüfproben-Depots. Jedes der Prüfproben-Depots weist eine Probenhalterfassung zur positionsdefinierten Aufnahme eines der automatenspezifischen Probenhalter auf.

Zudem verfügt die Übergabestation im Schutzbereich über eine Verschlussentfernervorrichtung zum automatisierten Entfernen des Verschlusses der Probenbehältnisse. Da die Probenbehältnisse üblicherweise mit einer Verschlusskappe verschlossen sind, die mittels der Verschlussentfernervorrichtung entfernt wird, wird der Prozess des Entfernens des Verschlusses in der Fachsprache auch als Decapping und die Verschlussentfernervorrichtung als Decapper bezeichnet.

Des Weiteren weist die Übergabestation eine Bilderfassungseinheit zur Bilderfassung der Probenbehältnisse, einen Etikettenleser zum Auslesen der Datenetiketten sowie eine mit der Bilderfassungseinheit und dem Etikettenleser verbundene Datenverarbeitungseinheit auf. Die Datenverarbeitungseinheit, typischerweise ein Computer, ist zur bildanalysegestützten Fehlerprüfung der mittels der Bilderfassungseinheit erfassten Bilder der Probenbehältnisse der Patientenproben und zur Verarbeitung der vom Datenetikett mittels des Etikettenlesers ausgelesenen Daten ausgebildet. Die bildanalysegestützte Fehlerprüfung kann zum Beispiel eine Füllstandskontrolle des im Probenbehältnis enthaltenen flüssigen Untersuchungsmaterials sein. Da die im Laborbetrieb gängigen Probenbehältnisse für sichtbares Licht transparent sind, kann mittels Bildanalyse das Untersuchungsmaterial optisch zuverlässig erfasst werden.

Vorzugsweise umfasst die Übergabestation den oder einen der Industrieroboter der Laboranlage sowie eine mit der Datenverarbeitungseinheit verbundene Steuerungseinrichtung zur Steuerung dieses Industrieroboters. Der Industrieroboter der Übergabestation bzw. der dieser zugeordnete Industrieroboter kann zum Beispiel der Industrieroboter sein, der auch die Analyse-Vollautomaten bestückt. Der Industrieroboter kann auch ein separater, direkt an der Trägerstruktur der Übergabestation angebrachter Industrieroboter sein.

Der Industrieroboter ist vorzugsweise ein sogenannter Pick-and-Place-Roboter zur robotergestützten Handhabung von Patientenproben und zur Anlagenbedienung, d. h., um insbesondere den Transfer und das Platzieren von Patientenproben innerhalb der Laboranlage gesteuert durchzuführen und Bedienelemente der Geräte der Laboranlage zu bedienen. Der Industrieroboter weist typischerweise einen Manipulator in Form eines Roboterarms, eine Steuerung sowie einen Endeffektor in Form eines Greifwerkzeugs auf.

Der Industrieroboter ist eingerichtet, die Patientenproben automatisiert aus dem Probeneingabe-Depot zu entnehmen und weiterzuverarbeiten. Zudem übernimmt er den automatisierten Transfer der Patientenproben zum Etikettenleser, um das jeweilige Datenetikett auszulesen. Darüber hinaus transferiert der Industrieroboter die Patientenproben zur Bilderfassungseinheit, wo eine Bilderfassung der jeweiligen Patientenprobe erfolgt. Zudem ist der Industrieroboter eingerichtet, die Patientenproben zur Verschlussentfernervorrichtung zu transferieren, um den Verschluss vom Probenbehältnis der Patientenproben automatisiert zu entfernen. Ferner ist der Industrieroboter ausgebildet, die Patientenproben positionsdefiniert in einen der in einer der Prüfproben-Depots befindlichen automatenspezifischen Probenhalter einzusetzen. Die Steuerungseinrichtung koordiniert das positionsdefinierte Einsetzen der Patientenproben in die automatenspezifischen Probenhalter durch den Industrieroboter in Abhängigkeit vom Prüfergebnis der bildanalysegestützten Fehlerprüfung sowie in Abhängigkeit der aus dem Datenetikett ausgelesenen Probeninformationen.

Die erfindungsgemäße Laboranlage umfasst neben der vorgeschlagenen Übergabestation den mindestens einen Analyse-Vollautomaten zur Untersuchung der Patientenproben sowie den mindestens einen Industrieroboter zur Handhabung der Patientenproben.

Die vorgeschlagene, auch als Durchreiche bezeichnete, Übergabestation, die einen Teil einer bzw. der Laboranlage zur automatisierten labormedizinischen Probenanalyse bildet, dient neben dem Einschleusen von Patientenproben in die Laboranlage zudem als Sortierstation zum Vorsortieren der Patientenproben. Durch das gezielte Einsetzen in die in den Prüfproben-Depots platzierten Probenhalter erfolgt eine Zuordnung zu unterschiedlichen Analyse-Vollautomaten, in denen die jeweilige Patientenprobe zu analysieren ist.

Ein Vorteil der beschriebenen Technologie liegt in der sicheren und effizienten Handhabung von Patientenproben. Durch die Implementierung einer strukturierten Übergabestation wird die manuelle Interaktion mit den zur Analytik geöffneten Patientenproben auf ein Minimum reduziert, wodurch das Kontaminationsrisiko erheblich gesenkt wird. Das Laborpersonal hat nur im Bedienerbereich Zugriff auf die Patientenproben, während die eigentliche Analyse und Handhabung innerhalb des zugangs- und zugriffsbeschränkten Schutzbereichs bzw. Prüfbereichs stattfindet. Die räumliche Trennung gewährleistet eine kontrollierte Probenübergabe und schützt die Patientenproben vor unbefugtem Zugriff oder unbeabsichtigter Manipulation. Um den Eingriff des Laborpersonals in den Schutzbereich zu verhindern, ist im einfachsten Fall die Größe der Bedienerkammer so gewählt, dass diese tiefer ist als eine Armlänge. Damit kann bei ordnungsgemäßer Bedienung ein Eingriff in den Schutzbereich nicht vorkommen. Ggf. kann zusätzlich ein Lichtgitter (Sicherheits-Lichtvorhang) im Bereich der Durchtrittsöffnung eingebaut sein, mittels dessen ein unzulässiger Eingriff detektiert und signalisiert werden kann.

Ein weiterer Vorteil ergibt sich aus der Automatisierung der Prozessschritte innerhalb der Übergabestation. Die Patientenproben werden positionsdefiniert in automatenspezifischen Probenhaltern abgelegt, wodurch eine exakte und fehlerfreie Zuordnung zu den Analyse-Vollautomaten gewährleistet wird. Die Integration der Prüfproben-Depots gewährleistet eine strukturierte Organisation und Ablage der Patientenproben für die Analyse. Dies verbessert die Gesamtproduktivität des Labors, da zeitaufwendige manuelle Sortier- und Erfassungsprozesse entfallen.

Die Patientenproben durchlaufen ferner eine automatisierte Erfassung durch die Bilderfassungseinheit sowie den Etikettenleser. Dies sorgt für eine lückenlose Rückverfolgbarkeit der Patientenproben und ermöglicht eine direkte Fehlerprüfung. Fehlerhafte Proben können frühzeitig erkannt und aussortiert werden, wodurch Fehldiagnosen oder ineffiziente Analyseprozesse vermieden werden. Die Bilderfassungseinheit kann ferner zur Überwachung der Bedienerkammer ausgebildet sein, zum Beispiel um den Eingriff zu erfassen und zu dokumentieren.

Die in die Übergabestation integrierte Verschlussentfernervorrichtung bietet einen weiteren Vorteil der beschriebenen Technologie. Da die Verschlüsse der Probenbehältnisse automatisch entfernt werden, entfällt die Notwendigkeit einer manuellen Öffnung, was sowohl die Prozessgeschwindigkeit als auch die Sicherheit erhöht. Dadurch wird der Arbeitsaufwand für das Laborpersonal reduziert und auch das Risiko von Fehlern oder Kontaminationen, die durch manuelles Decapping entstehen könnten, minimiert.

Die beschriebene Übergabestation trägt maßgeblich zur Effizienzsteigerung in automatisierten, d. h. mit Industrierobotern arbeitenden, medizinischen Labors bei, indem sie einen hohen Automatisierungsgrad mit einer lückenlosen Rückverfolgbarkeit der Patientenproben kombiniert. Dadurch wird die Probenanalyse beschleunigt und sicher gestaltet; gleichzeitig wird der Arbeitsaufwand für das Laborpersonal erheblich reduziert. Die Integration dieser Technologie in moderne Laboranlagen unterstützt eine präzise und zuverlässige labormedizinische Diagnostik und trägt dazu bei, Fehlerquoten und Bearbeitungszeiten zu verringern.

Mittels des Industrieroboters können alle Prozessschritte im Schutzbereich vollautomatisch ausgeführt werden. In den Bedienerbereich greift der Industrieroboter nur ein, wenn zum Beispiel eine Patientenprobe aus dem Probeneingabe-Depot zu entnehmen ist. Durch das Lichtgitter in der Eingriffsöffnung kann hierbei sichergestellt werden, dass der Eingriff des Industrieroboters in den Bedienerbereich nur erfolgt, wenn das Lichtgitter nicht ausgelöst ist, d. h., wenn das Laborpersonal nicht in der Bedienerkammer tätig ist. Damit werden mit Unfallrisiken behaftete Kontakte zwischen Industrieroboter und Laborpersonal vermieden.

Vorzugsweise umfasst die Übergabestation eine in die Trägerstruktur integrierte Zentrifuge. Die Zentrifuge weist eine Beladungsöffnung auf, die innerhalb des Schutzbereichs der Übergabestation angeordnet ist. Über diese Beladungsöffnung können die Patientenproben durch den Industrieroboter automatisiert in die Zentrifuge eingebracht und nach Abschluss der Zentrifugation automatisiert wieder entnommen werden.

Durch die Integration der Zentrifuge in die Übergabestation entfällt die Notwendigkeit, Patientenproben manuell zu einem separaten Zentrifugenarbeitsplatz zu transportieren. Dies reduziert den logistischen Aufwand, verkürzt die Verarbeitungszeiten und minimiert das Risiko von Fehlplatzierungen oder Verwechslungen der Patientenproben während der Zentrifugation. Da die mit der Zentrifugation verbundene Handhabung der Patientenproben vollständig im Schutzbereich der Übergabestation bzw. im Prüfbereich der Laboranlage stattfindet, ist eine kontinuierliche und fehlerfreie Probenhandhabung gewährleistet. Durch die Integration der Zentrifuge in die Übergabestation ist die Zentrifugation von Patientenproben vollständig in den gesamten Workflow der Laboranlage eingebunden. Dadurch wird die Probenverarbeitungsgeschwindigkeit verbessert und zugleich eine optimale Kontrolle und Rückverfolgbarkeit der Patientenproben ermöglicht.

Zusätzlich bietet die integrierte Zentrifuge den Vorteil einer platzsparenden Bauweise, da sie innerhalb der Trägerstruktur der Übergabestation verbaut ist. Dadurch wird der vorhandene Laborplatz effizient genutzt, ohne dass separate Zentrifugenarbeitsplätze benötigt werden. Dies reduziert den Flächenbedarf und trägt zu einer besseren Organisation des Labors bei. Insbesondere kann die Zentrifuge in einer Schublade in der Trägerstruktur untergebracht sein. Diese ermöglicht im Fall von Störungen und/oder Wartungen einen schnellen Zugriff auf die Zentrifuge.

Gemäß einer Ausgestaltung weist die Übergabestation ein Fehlproben-Depot mit mehreren Probenaufnahmen zur Aufnahme fehlerbehafteter Patientenproben auf. Das Fehlproben-Depot ist am Übergang vom Schutzbereich zum Bedienerbereich angeordnet, sodass fehlerbehaftete Patientenproben durch den Industrieroboter automatisiert in die Probenaufnahmen des Fehlproben-Depots einsetzbar sind. Die fehlerbehafteten Patientenproben können dann vom Laborpersonal manuell aus dem Fehlproben-Depot entnommen werden.

Patientenproben, die im Rahmen der bildanalysegestützten Fehlerprüfung als fehlerbehaftet identifiziert werden, zum Beispiel Patientenproben, die eine zu geringe Füllung mit Untersuchungsmaterial oder eine ungewöhnliche Verfärbung des Untersuchungsmaterials besitzen, können im Sinne einer Eingangskontrolle sofort erkannt und in das Fehlproben-Depot eingebracht werden. Nimmt das Laborpersonal wahr, dass im Fehlproben-Depot Patientenproben eingesetzt sind, kann es diese entnehmen und darauf reagieren, zum Beispiel indem eine neue Patientenprobe vom entsprechenden Patienten angefordert wird. Durch das frühzeitige Aussortieren fehlerbehafteter Proben werden Analysen vermieden, die unzureichende oder gar falsche Testergebnisse liefern. Dies verbessert die Genauigkeit und Zuverlässigkeit der labormedizinischen Probenanalyse und minimiert das Risiko von Fehlmessungen oder fehlerhaften Diagnosen.

Es kann ferner vorgesehen sein, dass die Übergabestation ein im Schutzbereich angeordnetes Puffer-Depot mit mehreren Probenaufnahmen zur Aufnahme der Patientenproben aufweist. Die Patientenproben sind mittels des Industrieroboters zur Zwischenlagerung in die Probenaufnahmen des Puffer-Depots positionsdefiniert und automatisiert einsetzbar sowie aus diesen automatisiert entnehmbar. Das Puffer-Depot ermöglicht eine temporäre Zwischenlagerung, wodurch Engpässe im Laborprozess vermieden werden. Dies ist besonders vorteilhaft, wenn Analyse-Vollautomaten ausgelastet sind oder bestimmte Patientenproben erst zu einem späteren Zeitpunkt weiterverarbeitet werden sollen.

Die Bilderfassungseinheit ist vorzugsweise eine Kamera. Auch der Etikettenleser kann eine Kamera bzw. ein kamerabasiertes System sein. Insbesondere kann die Übergabestation eine Kamera aufweisen, die gleichzeitig den Etikettenleser zum Auslesen der Datenetiketten und die Bilderfassungseinheit zur Bilderfassung der Patientenproben bildet. Wenn eine solche Kamera sowohl die Funktion des Etikettenlesers als auch die Funktion der Bilderfassungseinheit übernimmt, wird der technische Aufbau der Übergabestation vereinfacht, wodurch sich die Anzahl der erforderlichen Komponenten der Übergabestation reduziert.

Die verkleidete Trägerstruktur der Übergabestation umfasst vorzugsweise ein aus Konstruktionsprofilelementen aufgebautes Gestell. Die Konstruktionsprofilelemente sorgen für eine stabile und modulare Konstruktion der Übergabestation. Durch die Verwendung von Konstruktionsprofilelementen wird eine hohe Strukturfestigkeit gewährleistet, während gleichzeitig eine flexible Anpassung der Übergabestation an unterschiedliche räumliche Gegebenheiten ermöglicht wird. Als Konstruktionsprofilelemente haben sich insbesondere T-Nut-Profile bewährt. Die Konstruktionsprofilelemente sind aufgrund des geringen Gewichts und der hohen Korrosionsbeständigkeit vorzugsweise aus einem Aluminiumwerkstoff hergestellt, d. h. aus Aluminiumprofilen. Als gängige Größen eignen sich 80×80L-Profile, 40×80L-Profile oder 40×40L-Profile, d. h. Leichtbau-Profile mit Querschnittsabmessungen von 80 mm × 80 mm, 40 mm × 80 mm bzw. 40 mm × 40 mm. Als Verkleidung sind plattenförmige Verkleidungselemente, zum Beispiel Aluminium-Verbundplatten, am Gestell angebracht.

Die Trägerstruktur kann ferner eine oder mehrere Arbeitsplatten umfassen. Vorzugsweise bilden diese in der Bedienerkammer eine ebene Tischfläche aus, die auch in den an den Bedienerbereich angrenzenden Bereich reichen kann. Hierdurch wird eine einheitliche, stabile Arbeitsfläche für die manuelle und automatisierte Probenhandhabung geschaffen. Die Arbeitsplatten sind vorzugsweise Hochdruckschichtstoffplatten.

In Verbindung mit der Ausbildung der Tischfläche kann vorgesehen sein, dass die Übergabestation im Bereich der Durchtrittsöffnung der Bedienerkammer eine auf der Tischfläche aufsitzende, brüstungsartig ausgebildete Durchtrittsbarriere aufweist. Die Durchtrittsbarriere ist so ausgebildet, dass sie den Durchtritt vom Bedienerbereich in den Schutzbereich in Tischflächennähe verhindert. Patientenproben können so nicht versehentlich in den Schutzbereich rollen oder fallen, insbesondere nicht in die Beladungsöffnung der Zentrifuge.

Die Trägerstruktur kann ferner am Gestell angebrachte Stellfüße umfassen, mittels derer die Übergabestation an Unebenheiten des Laborfußbodens angepasst werden kann.

Weiterhin kann die Übergabestation einen Schaltschrank umfassen, der vorzugsweise beidseitig, d. h. bediener- und schutzbereichsseitig, erreichbar ist.

Die Probenhalter sind, wie bereits beschrieben, so gestaltet, dass sie direkt in einen Analyse-Vollautomaten eingesetzt werden können. Dies ermöglicht es dem Industrieroboter, die mit Patientenproben bestückten Probenhalter direkt in den Analyse-Vollautomaten einzuschleusen. Da die automatisierten Laboranlagen zumeist verschiedene Analyse-Vollautomaten beinhalten, umfasst die Übergabestation daher vorzugsweise mehrere der Prüfproben-Depots. Die Anzahl und Art der Prüfproben-Depots können an den Durchsatz und die Ausstattung der jeweiligen Laboranlage angepasst werden.

Der Probenhalter kann zum Beispiel als sogenannter Tray ausgebildet sein. Das Tray besitzt eine block- oder plattenförmige Grundstruktur mit darin eingebrachten Aussparungen, in die jeweils ein Probenbehältnis (zum Beispiel ein Probenröhrchen zur Aufnahme von Probenblut) formschlüssig einsetzbar ist. Das Tray ist ähnlich einer Lochplatte aufgebaut. Die Aussparungen sind üblicherweise matrixartig in mehreren Reihen angeordnet.

Der Probenhalter kann ferner als sogenanntes Rack ausgebildet sein. Das Rack ist ein blockartiges Aufnahmegestell für Probenbehältnisse, in dem mehrere Patientenproben in einer Reihe angeordnet aufgenommen werden können.

Der Probenhalter kann ferner mehrere Racks umfassen, die gemeinsam in einer Einheit zusammengefasst sind, zum Beispiel in einem Trägerkorb. Der Probenhalter umfasst hierbei dann den Trägerkorb und die darin platzierten Racks.

Die Begriffe Rack und Tray werden in dieser Beschreibung in ihrer englischen Form verwendet, da sie in der Laborbranche üblich sind und eine eindeutige Bezeichnung der jeweiligen Probenhalter ermöglichen.

Die Probenhalterfassung ist regelmäßig geometrisch an den Probenhalter angepasst. Dies bedeutet, dass die Probenhalterfassung vorzugsweise so gestaltet ist, dass der Probenhalter formschlüssig in sie einsetzbar ist. Hierdurch wird sichergestellt, dass der Probenhalter in einer definierten Position innerhalb der Probenhalterfassung gehalten wird, wodurch eine präzise Platzierung gewährleistet ist. Dies ermöglicht eine sichere und stabile Aufnahme sowie eine exakte Führung des Probenhalters während des automatisierten Handhabungsprozesses durch den Industrieroboter. Die formschlüssige Einsetzbarkeit des Probenhalters in die Probenhalterfassung trägt dazu bei, Fehlpositionierungen zu vermeiden und eine zuverlässige Entnahme sowie das Wiedereinsetzen des Probenhalters zu ermöglichen.

Die Prüfproben-Depots können beispielsweise so aufgebaut sein, dass eine der Arbeitsplatten eine Basisfläche ausbildet, auf der sich die Probenhalterfassung befindet, die zur exakten Positionierung und sicheren Halterung des Probenhalters auf der Arbeitsplatte dient. Die Arbeitsplatte ist üblicherweise horizontal ausgerichtet, wobei die Oberfläche, auf der die Probenhalterfassung ausgebildet ist, an der oberen Seite der Arbeitsplatte liegt. Die Probenhalterfassung gemäß dieser Ausführung weist mehrere Führungselemente auf, die umzäunend um den eingesetzten Probenhalter angeordnet sind. Durch diese Anordnung wird gewährleistet, dass der Probenhalter in einer stabilen und definierten Position verbleibt, sodass eine präzise Aufnahme und Entnahme durch den Industrieroboter möglich sind.

In dieser Ausführung können die Führungselemente insbesondere als Führungskeile ausgebildet sein. Die Führungskeile sind hierbei so ausgerichtet, dass sich die in Ebenen parallel zur Arbeitsplatte zwischen den Führungskeilen innerhalb der Probenhalterfassung liegenden Flächen zur Arbeitsplatte hin verkleinern. D. h., bei üblicher Ausführung öffnet sich die Probenhalterfassung nach oben, sodass der Probenhalter beim Einsetzen von oben mittels der Führungskeile in die engste Position innerhalb der Probenhalterfassung geführt und in dieser Position auf der Arbeitsplatte oder an einem Boden des Probenhalters fixiert wird. Durch diese spezifische Anordnung der Führungskeile wird gewährleistet, dass der Probenhalter beim Einsetzen in die Probenhalterfassung präzise geführt und in einer definierten Position gehalten wird.

Die vorstehend beschriebenen Ausführungen der Prüfproben-Depots mit umzäunender Probenhalterfassung können zum Beispiel für als Tray ausgeführte Probenhalter realisiert sein. Diese Ausführung des Prüfproben-Depots wird vorliegend als Tray-Depot bezeichnet.

Bilden Racks in einem Trägerkorb den jeweiligen Probenhalter, wird das Prüfproben-Depot vorliegend als Rack-Korb-Depot bezeichnet. In dieser Ausführung kann die Probenhalterfassung zudem Zentrierelemente umfassen, die das Zentrieren der Racks im Trägerkorb ermöglichen.

Gemäß einer anderen Ausführung der Prüfproben-Depots ist das jeweilige Prüfproben-Depot so ausgebildet, dass der Probenhalter und die Probenhalterfassung einen Schiebesitz zur Halterung des Probenhalters in der Probenhalterfassung aufweisen. Die Probenhalterfassung weist hierzu mindestens ein Führungselement in Form einer Führungsschiene auf, entlang derer der an die Führungsschiene angepasste und durch die Führungsschiene geführte Probenhalter in die Probenhalterfassung einschiebbar ist. Die Schiebesitz-Ausführung der Prüfproben-Depots eignet sich insbesondere für als Racks ausgebildete Probenhalter, die in die Probenhalterfassung eingeschoben werden. Diese Ausführung des Prüfproben-Depots wird vorliegend auch als Rack-Garage bezeichnet.

Die Übergabestation kann weiterhin ein oder mehrere Verschlusskappen-Depots aufweisen. Diese umfassen jeweils eine Probenhalterfassung, die in vergleichbarer Weise aufgebaut ist wie die der Prüfproben-Depots. Die Probenhalterfassung dient zur Aufnahme eines Probenhalters. In diesem Probenhalter sind Verschlusskappen für die Patientenproben aufgenommen bzw. aufnehmbar. Die Ausführung der Übergabestation ermöglicht es, geöffnete Probenbehältnisse automatisiert mit den in den Verschlusskappen-Depots bereitstehenden Verschlusskappen zu verschließen bzw. wieder zu verschließen. Vorzugsweise ist der Probenhalter des Verschlusskappen-Depots als Tray ausgebildet und das Verschlusskappen-Depot mithin als Tray-Depot. Auf diese Weise können mehrere Verschlusskappen in geordneter Anordnung bevorratet und bedarfsgerecht bereitgestellt werden. Dadurch wird die Handhabung im Labor erheblich erleichtert, da die Verschlusskappen automatisiert oder manuell entnommen und den entsprechenden Probengefäßen zugeführt werden können. Dadurch werden Prozesssicherheit und Arbeitseffizienz erhöht.

Ferner kann die Übergabestation ein Zentrifugenbecher-Depot zur Aufnahme von Zentrifugenbechern aufweisen. Die Zentrifugenbecher sind eine besondere Form der Probenhalter, die für die Verwendung in der Zentrifuge vorgesehen sind. Sie dienen dazu, die Patientenproben während des Zentrifugierens sicher aufzunehmen und zu fixieren, sodass eine kontrollierte Trennung der Probenbestandteile ermöglicht wird.

Gemäß einer weiteren Ausgestaltung kann die Übergabestation ein spezielles Ausgleichsröhrchen-Depot enthalten, das zur geordneten Aufnahme und Bereitstellung von Ausgleichsröhrchen vorgesehen ist. Diese Ausgleichsröhrchen erfüllen die Funktion, ein Gleichgewicht zwischen den in der Zentrifuge eingesetzten Probenhaltern, d. h. den Zentrifugenbechern, herzustellen. Beim Zentrifugieren ist es erforderlich, dass die Zentrifuge gleichmäßig belastet wird, um Vibrationen, Unwuchten oder Beschädigungen zu vermeiden. In Fällen, in denen die Anzahl oder das Füllvolumen der vorhandenen Patientenproben nicht ausreicht, werden daher Ausgleichsröhrchen eingesetzt. Sie übernehmen das Gewicht einer fehlenden oder unzureichend gefüllten Patientenprobe und stellen so die notwendige Massenbalance sicher, die für einen sicheren und zuverlässigen Betrieb der Zentrifuge erforderlich ist.

Die Probenhalterfassung kann ferner einen oder mehrere Präsenzsensoren umfassen, mittels deren das Vorhandensein bzw. Nichtvorhandensein des Probenhalters in der Probenhalterfassung detektierbar ist. Der Präsenzsensor kann zudem so eingerichtet sein, die korrekte Position und Lage des Probenhalters zu prüfen bzw. zu überwachen. Dadurch wird sichergestellt, dass der Probenhalter ordnungsgemäß eingesetzt ist und ein zuverlässiger Transport sowie eine sichere Weiterverarbeitung gewährleistet werden. Fehlerhafte Positionierungen, die zu Blockaden, Fehlmessungen oder Beschädigungen führen könnten, lassen sich auf diese Weise frühzeitig erkennen und vermeiden.

Die Präsenzsensoren können in gleicher Weise am Zentrifugenbecher-Depot zur Präsenzprüfung der Zentrifugenbecher und am Ausgleichsröhrchen-Depot zur Präsenzprüfung der Ausgleichsröhrchen integriert sein. Auf diese Weise ist in allen relevanten Depots eine automatisierte Kontrolle möglich, die nicht nur die Betriebszuverlässigkeit erhöht, sondern auch den Bedienaufwand reduziert, da der Systemstatus jederzeit überprüfbar ist.

In der Probenhalterfassung, vorzugsweise an deren Boden, können ein oder mehrere Haltemagnete installiert sein, die den Probenhalter nach dem Einsetzen fixieren. Die Haltemagnete bewirken, dass der Probenhalter zuverlässig in Position gehalten wird und nicht verrutschen oder sich ungewollt bewegen kann. Auf diese Weise wird eine präzise Lage des Probenhalters innerhalb der Übergabestation gewährleistet, was insbesondere für automatisierte Handhabungsvorgänge von großer Bedeutung ist. Gleichzeitig entfällt der Bedarf an aufwendigen mechanischen Verriegelungen, sodass die Handhabung vereinfacht und beschleunigt wird. Dadurch wird die Prozesssicherheit erhöht und eine reibungslose Automatisierung im Laborbetrieb unterstützt.

Die Erfindung ist nachfolgend anhand von Ausführungsbeispielen und mit Bezug auf die schematischen Zeichnungen näher erläutert, wobei gleiche oder ähnliche Merkmale mit gleichen Bezugszeichen versehen sind; dazu zeigen:
- Fig. 1:: eine erste Ausführung der Übergabestation in perspektivischer Ansicht auf die Schutzbereichsseite,
- Fig. 2:: die erste Ausführung der Übergabestation in erster perspektivischer Ansicht auf die Bedienerseite, und
- Fig. 3:: die erste Ausführung der Übergabestation in zweiter perspektivischer Ansicht auf die Bedienerseite,
- Fig. 4:: eine zweite Ausführung der Übergabestation in perspektivischer Ansicht auf die Schutzbereichsseite,
- Fig. 5:: die zweite Ausführung der Übergabestation in perspektivischer Ansicht auf die Bedienerseite,
- Fig. 6:: eine erste Ausführung des Prüfproben-Depots in perspektivischer Ansicht,
- Fig. 7:: die Probenhalterfassungen der ersten Ausführung des Prüfproben-Depots in perspektivischer Ansicht,
- Fig. 8:: eine zweite Ausführung des Prüfproben-Depots in perspektivischer Ansicht,
- Fig. 9:: die Probenhalterfassung der zweiten Ausführung des Prüfproben-Depots in perspektivischer Ansicht,
- Fig. 10:: die Probenhalterfassung der zweiten Ausführung des Prüfproben-Depots in der Draufsicht,
- Fig. 11:: eine Ausführung des Verschlusskappen-Depots in perspektivischer Ansicht,
- Fig. 12:: die Probenhalterfassungen der Ausführung des Verschlusskappen-Depots in perspektivischer Ansicht,
- Fig. 13:: eine dritte Ausführung des Prüfproben-Depots in perspektivischer Ansicht,
- Fig. 14:: die Probenhalterfassung der dritten Ausführung des Prüfproben-Depots in perspektivischer Ansicht,
- Fig. 15:: den Trägerkorb der Probenhalterfassung der dritten Ausführung des Prüfproben-Depots in perspektivischer Ansicht,
- Fig. 16:: eine Ausführung des Zentrifugenbecher-Depots in perspektivischer Ansicht, und
- Fig. 17:: eine Ausführung des Ausgleichsröhrchen-Depots in perspektivischer Ansicht.

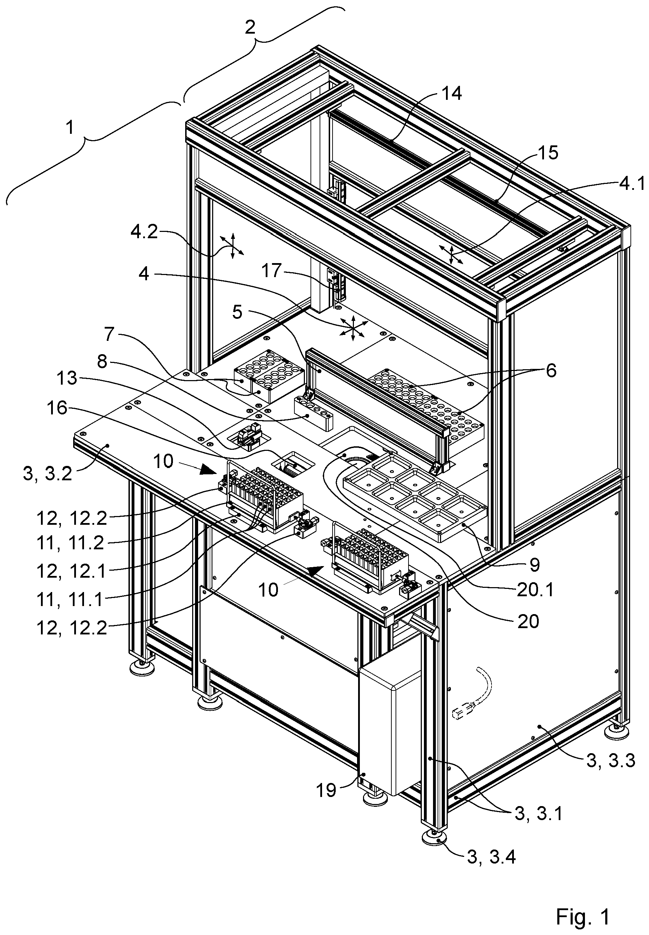

Die als Labormöbel ausgebildete Übergabestation gemäß der ersten Ausführung in Fig. 1 umfasst die Trägerstruktur 3, die ein Gestell aus mehreren Konstruktionsprofilelementen 3.1 besitzt, welches eine stabile Basis für die gesamte Konstruktion bildet. Als Verkleidung 3.3 sind Aluminium-Verbundplatten am Gestell angebracht. Die Arbeitsplatten 3.2 aus Hochdruckschichtstoff bilden eine Tischfläche in üblicher Arbeitshöhe. Die Stellfüße 3.4 dienen zum Nivellieren der Übergabestation.

Die Trägerstruktur 3 bildet im Bedienerbereich 2 die Bedienerkammer 4 aus, die durch die Durchtrittsöffnung 4.2 zum Schutzbereich 1 hin geöffnet ist. Gegenüberliegend zur Durchtrittsöffnung 4.2 befindet sich die Eingriffsöffnung 4.1, über die das Laborpersonal in die Bedienerkammer 4 eingreifen kann. Zur Überwachung von Bedienereingriffen in die Bedienerkammer 4 dient das Lichtgitter 17 in der Ebene der Eingriffsöffnung 4.1.

Die Übergabestation verfügt über eine deckenseitig in der Bedienerkammer 4 angeordnete Beleuchtungseinheit 14 zur optimalen Ausleuchtung des Arbeitsbereichs innerhalb der Bedienerkammer 4. Das die Beleuchtungseinheit 14 tragende Bauteil beinhaltet gleichzeitig die Bilderfassungseinheit 15. Auf der Tischfläche innerhalb der Bedienerkammer 4 befindet sich das Probeneingabe-Depot 6, das die manuell eingeschleusten Patientenproben (nicht dargestellt) in definierten Probenaufnahmen hält. Die als Trennwand ausgebildete brüstungsartige Durchtrittsbarriere 5 verhindert den unbeabsichtigten Durchtritt von Patientenproben in Tischnähe, lässt aber gleichzeitig genügend Raum für den Eingriff des (nicht dargestellten) Industrieroboters 21 in die Bedienerkammer 4.

Im Schutzbereich 1 befinden sich auf der Tischfläche zwei als Rack-Korb-Depots ausgebildete Prüfproben-Depots 10 mit den Probenhalterfassungen 12, die zur positionsdefinierten Aufnahme der automatenspezifischen Probenhalter 11 dienen. Der in Fig. 1 dargestellte jeweilige Probenhalter 11 besteht aus mehreren Racks 11.1 zur Aufnahme mehrerer Patientenproben und dem Trägerkorb 11.2 zum gemeinsamen Transport der Racks 11.1. Die jeweilige Probenhalterfassung 12 umfasst die Führungskeile 12.1 zur geführten Positionierung der Probenhalter 11 auf der Übergabestation und die Zentrierelemente 12.2 zur Zentrierung der Racks 11.1 im Trägerkorb 11.2.

Auf der Tischfläche der Übergabestation befinden sich zudem das Fehlproben-Depot 7 und das Puffer-Depot 8.

Zur Entfernung von Verschlüssen der Probenbehältnisse ist die Verschlussentfernervorrichtung 13 in die Übergabestation integriert. Die Verschlussentfernervorrichtung 13 umfasst den in Fig. 1 dargestellten Drehgreifer, mittels dessen der Verschluss vom Probenbehältnis der Patientenproben abgezogen wird.

Auf der Tischfläche neben der Verschlussentfernervorrichtung 13 befindet sich der Etikettenleser 16 zum Auslesen der Datenetiketten der Patientenproben.

Innerhalb der Trägerstruktur 3 befindet sich außerdem die integrierte Zentrifuge 20, die über die Beladungsöffnung 20.1 und eine dazu passende Aussparung in der Tischfläche mit Patientenproben bestückt werden kann. Das Einbringen der zu zentrifugierenden Patientenproben in die Zentrifuge 20 erfolgt mit Zentrifugenbechern (fachsprachlich: Buckets), die im Regelfall mehrere Patientenproben aufnehmen. Zur Aufnahme der (nicht dargestellten) Zentrifugenbecher dient das Zentrifugenbecher-Depot 9, das im Beispiel nach Fig. 1 acht Zentrifugenbecher aufnehmen kann und zur definierten Zwischenlagerung derselben dient.

Unterhalb der durch die Arbeitsplatten 3.2 gebildeten Tischfläche ist innerhalb der Trägerstruktur 3 ein Platz für die Integration weiterer Komponenten vorgesehen: in der Ausführung der Übergabestation gemäß Fig. 1 ist hierin beispielhaft eine Zusatzsteuerung 19 verbaut.

Der (nicht dargestellte) Industrieroboter 21 ist zentral für die automatisierte Handhabung der Patientenproben zuständig. Er entnimmt die Patientenproben aus dem Probeneingabe-Depot 6, führt sie zur Bilderfassungseinheit 15 und zum Etikettenleser 16 und überführt sie zur Verschlussentfernervorrichtung 13. Falls erforderlich, kann das Zentrifugieren als Zwischenschritt vorgenommen werden, wobei die Handhabung der Patientenproben zum Einbringen in die Zentrifuge 20 und zum Ausbringen aus der Zentrifuge 20 ebenfalls automatisiert mittels des Industrieroboters 21 erfolgt. Abschließend setzt der Industrieroboter 21 die Patientenproben nach der Verarbeitung positionsdefiniert in den vorgesehenen Probenhalter 11 in einem der Prüfproben-Depots 10 ab.

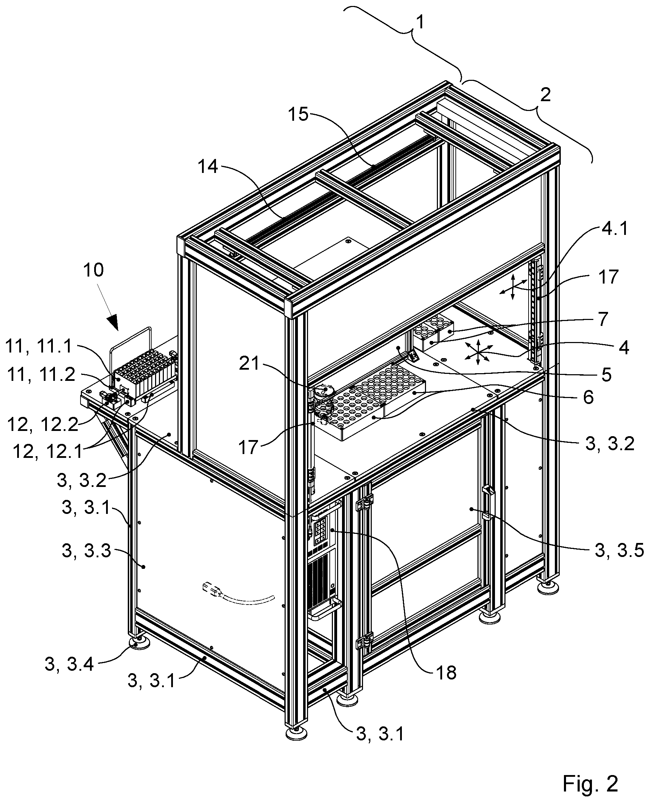

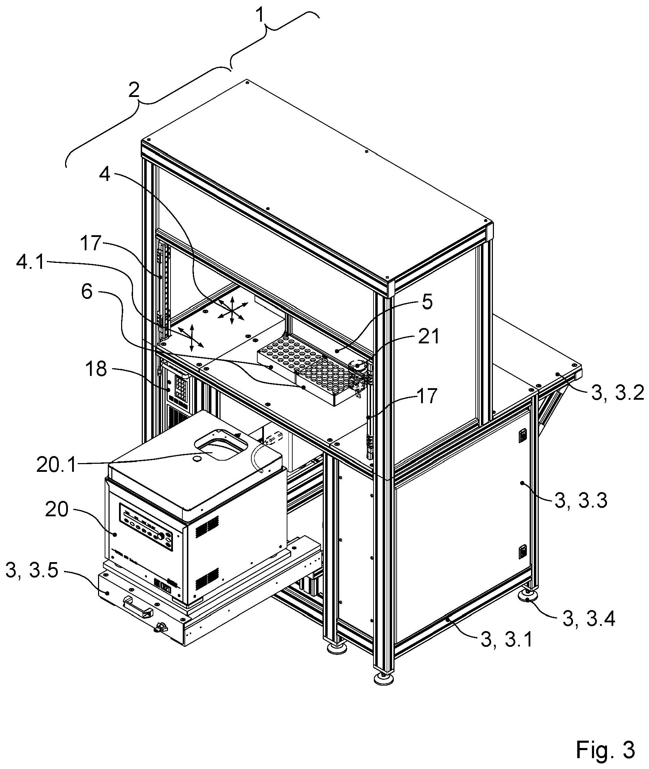

Die Fig. 2 und die Fig. 3 zeigen die in Fig. 1 dargestellte Ausführung der Übergabestation. Zusätzlich ist in Fig. 2 und Fig. 3 der Industrieroboter 21 in Form seines mit gestrichelten Linien dargestellten Endeffektors in einer Position innerhalb der Bedienerkammer 4 illustriert. Zudem ist in Fig. 2 und Fig. 3 die in die Trägerstruktur 3 integrierte Datenverarbeitungseinheit 18, hier ein Personalcomputer bzw. PC, erkennbar.

Die Schublade 3.5, die die Zentrifuge 20 aufnimmt, ist in Fig. 3 in herausgezogener Position gezeigt; in dieser Position können zum Beispiel Wartungsarbeiten an der Zentrifuge 20 durchgeführt werden. Fig. 2 zeigt die Schublade 3.5 in eingeschobener Betriebsposition.

Hinsichtlich der weiteren in Fig. 2 und Fig. 3 gezeigten Komponenten wird auf die Ausführungen zu Fig. 1 verwiesen.

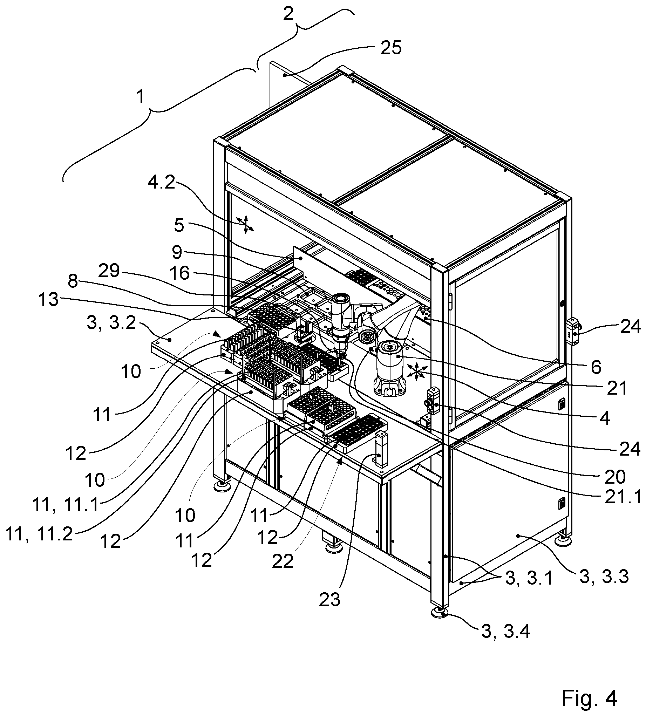

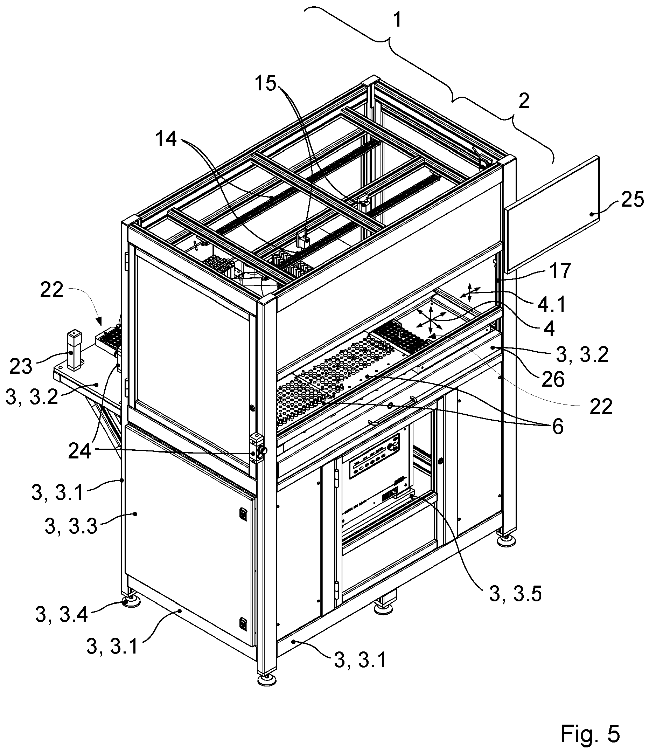

Die zweite Ausführung der Übergabestation gemäß Fig. 4 und Fig. 5 entspricht in ihrem Grundaufbau der ersten Ausführung gemäß Fig. 1 bis 3.

Hinsichtlich der bereits in Fig. 1 bis 3 beschriebenen Komponenten wird auf die Beschreibungen zu Fig. 1 bis 3 verwiesen. Im Unterschied hierzu ist in der Darstellung der zweiten Ausführung der Übergabestation gemäß Fig. 4 der Industrieroboter 21 mit einem als Greifer ausgebildeten Endeffektor 21.1 gezeigt. Dieser Industrieroboter 21 ist fest installierter Teil der Übergabestation und dient zur Handhabung der Patientenproben innerhalb der Übergabestation.

Die Handhabung von Patientenproben im Schutzbereich 1 erfolgt üblicherweise mittels eines weiteren (nicht dargestellten) Industrieroboters 21, der Teil der Laboranlage ist und mit dem die Patientenproben unter anderem zu den Analyse-Vollautomaten verbracht werden. Üblicherweise besitzt auch dieser Industrieroboter 21 einen Endeffektor 21.1 zum Greifen der Patientenproben. Die zweite Ausführung der Übergabestation besitzt im Schutzbereich 1, auf der Arbeitsplatte 3.2, einen Endeffektor-Überwachungssensor 23, mittels der die Endeffektoren 21.1 der Industrieroboter 21 überwacht werden.

Die wiederum als Trennwand ausgebildete, brüstungsartige Durchtrittsbarriere 5, die zur Verhinderung des unbeabsichtigten Durchtritts von Patientenproben in Tischnähe dient, bildet die Trennebene zwischen dem Schutzbereich 1 und dem Bedienerbereich 2. In der zweiten Ausführung der Übergabestation gemäß Fig. 4 befindet sich diese Trennebene zwischen dem Schutzbereich 1 und dem Bedienerbereich 2 deutlich innerhalb der Bedienerkammer 4, während sie in der ersten Ausführung der Übergabestation in etwa in der Ebene der Durchtrittsöffnung 4.2 der Bedienerkammer 4 liegt.

Die zweite Ausführung der Übergabestation - siehe Fig. 4 und Fig. 5 - ist mit zwei Notausschaltern 24 ausgestattet, die jeweils an der Trägerstruktur 3 angebracht sind. Einer der Notausschalter 24 befindet sich auf der Schutzseite 1, der andere Notausschalter 24 auf der Bedienerseite 2.

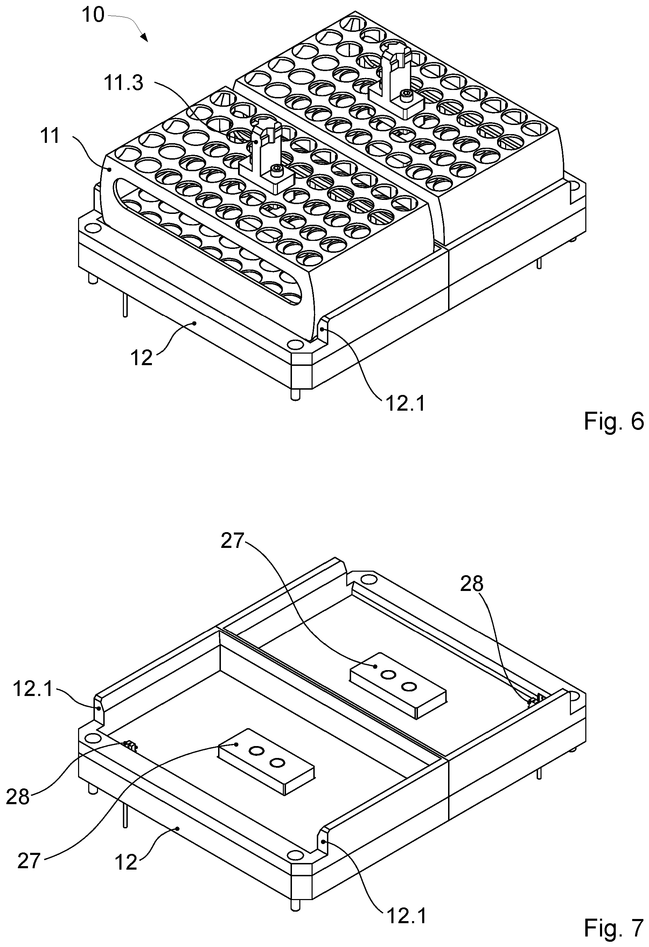

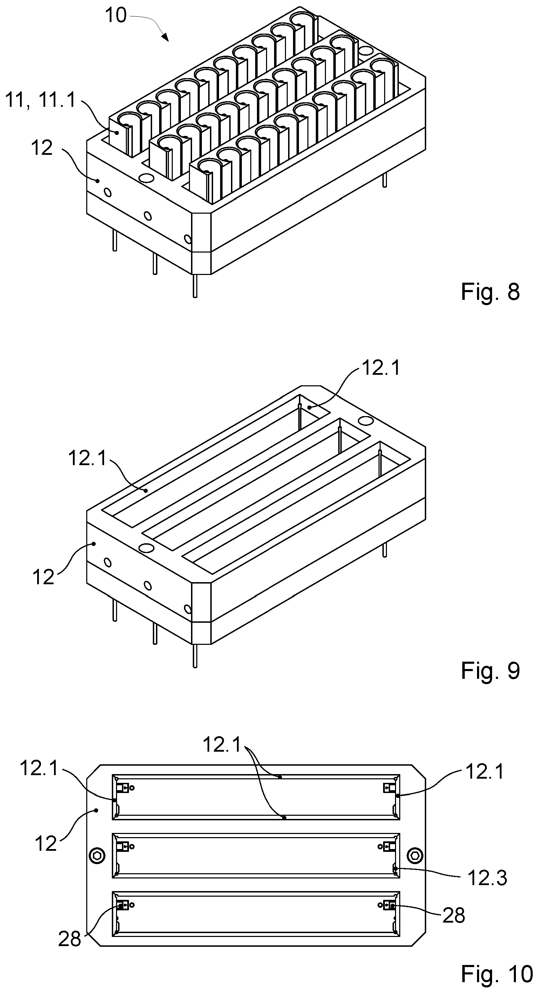

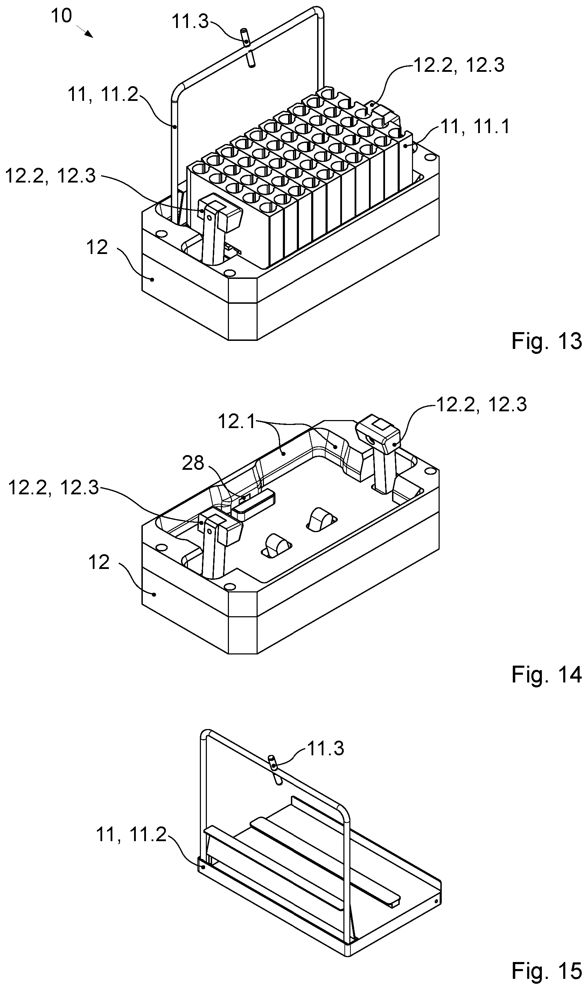

Im Unterschied zur ersten Ausführung der Übergabestation gemäß Fig. 1 umfasst die zweite Ausführung der Übergabestation gemäß Fig. 4 verschiedene Ausführungen der Prüfproben-Depots 10. Zudem sind mehrere Verschlusskappen-Depots 22 installiert, von denen nur eines in Fig. 4 bezeichnet ist. Auf der Arbeitsplatte 3.2, im Schutzbereich 1, sind in der Darstellung nach Fig. 4 von links nach rechts zunächst zwei Prüfproben-Depots 10 gemäß einer in Fig. 8 näher beschriebenen Ausführung, dann zwei Prüfproben-Depots 10 (Rack-Korb-Depots) gemäß einer in Fig. 13 näher beschriebenen Ausführung, danach folgend zwei Prüfproben-Depots 10 (Tray-Depots) gemäß einer in Fig. 6 näher beschriebenen Ausführung und schließlich das Verschlusskappen-Depot 22 angeordnet. Die Prüfproben-Depots 10 umfassen jeweils die Probenhalterfassungen 12, die zur positionsdefinierten Aufnahme der automatenspezifischen Probenhalter 11 dienen. Das Verschlusskappen-Depot 22 umfasst ebenfalls eine Probenhalterfassung 12, die zur Aufnahme eines weiteren Probenhalters 11 dient, der für die Aufnahme von Verschlusskappen bzw. Stopfen vorgesehen ist.

In der Bedienerkammer 4, noch innerhalb des Schutzbereichs 1, ist zudem ein Ausgleichsröhrchen-Depot 29 zum Parken von Ausgleichsröhrchen angeordnet. Die Ausgleichsröhrchen dienen dazu, die Probenhalter 11 gleichmäßig auszulasten, zum Beispiel vor dem Zentrifugieren von Patientenproben.

Die Darstellung der zweiten Ausführung der Übergabestation gemäß Fig. 5, d. h. die Ansicht auf die Bedienerseite 2, zeigt einen an der Trägerstruktur 3 angebrachten Bildschirm 25, der auch in Fig. 4 sichtbar ist. Neben den bereits in Fig. 1 bis 4 beschriebenen Komponenten illustriert Fig. 5 die deckenseitige Positionierung der Beleuchtungseinheit 14, hier zwei parallel angeordnete Leuchtmittel, und der Bilderfassungseinheit 15, hier zwei Kameras.

Im Bedienerbereich 2 ist die Arbeitsplatte 3.2, auf der sich das Probeneingabe-Depot 6 befindet, in Form eines ausziehbaren, verriegelbaren Schubladentisches 26 ausgeführt. Neben dem Probeneingabe-Depot 6 befindet sich ein weiteres Verschlusskappen-Depot 22.

Fig. 6 und Fig. 7 veranschaulichen die in Fig. 4 auf der Arbeitsplatte 3.2 links neben dem Verschlusskappen-Depot 22 dargestellte Ausführung des Prüfproben-Depots 10. Diese Ausführung des Prüfproben-Depots 10 umfasst jeweils eine aus Führungskeilen 12.1 gebildete, teilumzäunende Probenhalterfassung 12. Die Fig. 6 und Fig. 7 zeigen jeweils zwei dieser Prüfproben-Depots 10, deren Probenhalterfassungen 12 aneinandergrenzen. Innerhalb der Probenhalterfassung 12 befindet sich ein Haltemagnet 27 zum temporären Fixieren des Probenhalters 11 in der Probenhalterfassung 12. Über den Präsenzsensor 28 wird erfasst, ob sich der Probenhalter 11 innerhalb der Probenhalterfassung 12 befindet und ob dieser korrekt positioniert ist. Zur automatisierten Handhabung des hier als Tray ausgebildeten Probenhalters 11 dient dessen Endeffektor-Greifelement 11.3.

Fig. 8 bis 10 veranschaulichen die in Fig. 4 auf der Arbeitsplatte 3.2 links dargestellte Ausführung des Prüfproben-Depots 10. Diese Ausführung des Prüfproben-Depots 10 umfasst die Probenhalterfassung 12, in der drei als Rack 11.1 ausgebildete Probenhalter 11 innerhalb jeweils einer von Führungskeilen 12.1 umzäunten Aufnahmeaussparung einsetzbar sind. In der jeweiligen Aufnahmeaussparung - siehe Fig. 10 - befindet sich jeweils ein als Kugeldruckstück ausgebildetes Fixierelement 12.3. Der Präsenzsensor 28 erfasst, ob sich der Probenhalter 11 innerhalb der Probenhalterfassung 12 befindet und ob er in dieser korrekt positioniert ist.

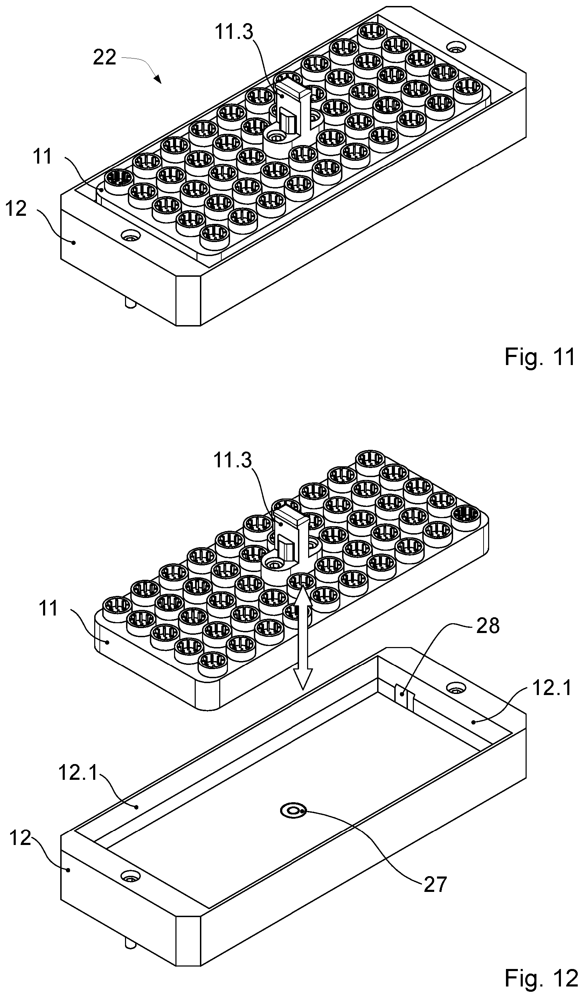

Das Verschlusskappen-Depot 22 gemäß der in Fig. 11 und Fig. 12 gezeigten Ausführung besitzt einen ähnlichen Aufbau wie das in Fig. 6 und Fig. 7 dargestellte Prüfproben-Depot 10. Der in der Probenhalterfassung 12 des Verschlusskappen-Depots 22 eingesetzte bzw. einsetzbare Probenhalter 11 ist als Tray zur Aufnahme von 48 Verschlusskappen ausgebildet. Zur automatisierten Handhabung des Probenhalters 11 dient dessen Endeffektor-Greifelement 11.3. Die Probenhalterfassung 12 besitzt eine von Führungskeilen 12.1 umzäunte Aufnahmeaussparung mit einem Haltemagneten 27 zum temporären Fixieren des eingesetzten Probenhalters 11. Der Präsenzsensor 28 erfasst, ob der Probenhalter 11 innerhalb der Probenhalterfassung 12 eingesetzt ist.

Das Prüfproben-Depot 10 gemäß Fig. 13 bis 15 entspricht den Ausführungen der Prüfproben-Depots 10 (Rack-Korb-Depots), die in Fig. 4 im mittleren Bereich der Arbeitsplatte 3.2 abgebildet sind. Die Probenhalterfassung 12 dient hierbei zur Aufnahme von Probenhaltern 11, die jeweils aus dem Trägerkorb 11.2 und den darin gehaltenen Racks 11.1 gebildet sind. Zur automatisierten Handhabung des Probenhalters 11 dient das am Trägerkorb 11.2 ausgebildete Endeffektor-Greifelement 11.3. Innerhalb der von Führungskeilen 12.1 umzäunten Aufnahmeaussparung der Probenhalterfassung 12 befinden sich zwei als Arme ausgebildete Zentrierelemente 12.2, die gleichzeitig auch als Fixierelemente 12.3 des Probenhalters 11 dienen. Beim Einsetzen des Probenhalters 11 klappen diese Arme, ausgelöst durch Druckelemente am Ausparungsboden, nach innen und fixieren und zentrieren den Probenhalter 11 innerhalb der Probenhalterfassung 12.

Der Präsenzsensor 28 erfasst, ob der Probenhalter 11 innerhalb der Probenhalterfassung 12 eingesetzt ist und ob er in dieser korrekt positioniert ist.

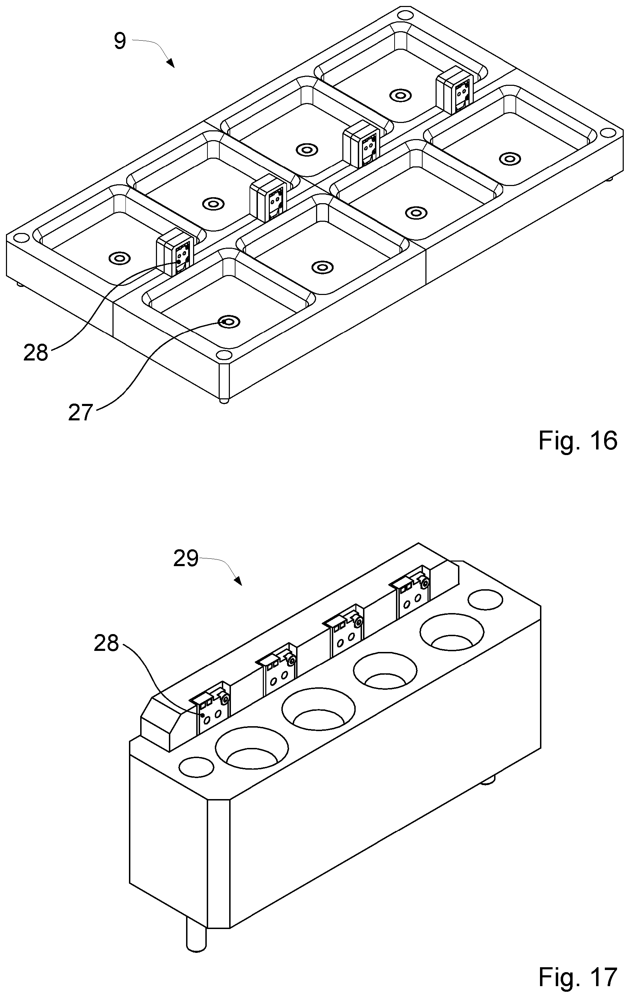

Das in Fig. 16 dargestellte Zentrifugenbecher-Depot 9 umfasst acht Aufnahmeaussparungen, in denen jeweils ein Zentrifugenbecher (auch "Bucket" bezeichnet) einsetzbar ist. Jeweils ein Haltemagnet 27 dient zum temporären Fixieren des eingesetzten Zentrifugenbechers. Die Präsenzsensoren 28 erfassen spezifisch für jede Aufnahmeaussparung, ob ein Zentrifugenbecher innerhalb einer spezifischen Aufnahmeaussparung des Zentrifugenbecher-Depots 9 eingesetzt ist.

Das Ausgleichsröhrchen-Depot 29 gemäß Fig. 17 umfasst vier Aufnahmeaussparungen zur Aufnahme jeweils eines Ausgleichsröhrchens. Jeder dieser Aufnahmeaussparungen ist ein Präsenzsensor 28 zugeordnet, mittels dessen die Präsenz des Ausgleichsröhrchens detektiert wird.

### Bezugszeichenliste

- 1: Schutzbereich
- 2: Bedienerbereich
- 3: Trägerstruktur
- 3.1: Konstruktionsprofilelement
- 3.2: Arbeitsplatte
- 3.3: Verkleidung
- 3.4: Stellfuß
- 3.5: Schublade
- 4: Bedienerkammer
- 4.1: Eingriffsöffnung
- 4.2: Durchtrittsöffnung
- 5: Durchtrittsbarriere
- 6: Probeneingabe-Depot
- 7: Fehlproben-Depot
- 8: Puffer-Depot
- 9: Zentrifugenbecher-Depot
- 10: Prüfproben-Depot
- 11: Probenhalter
- 11.1: Rack
- 11.2: Trägerkorb
- 11.3: Endeffektor-Greifelement
- 12: Probenhalterfassung
- 12.1: Führungskeil
- 12.2: Zentrierelement
- 12.3: Fixierelement
- 13: Verschlussentfernervorrichtung
- 14: Beleuchtungseinheit
- 15: Bilderfassungseinheit
- 16: Etikettenleser
- 17: Lichtgitter
- 18: Datenverarbeitungseinheit
- 19: Zusatzsteuerung
- 20: Zentrifuge
- 20.1: Beladungsöffnung
- 21: Industrieroboter
- 21.1: Endeffektor
- 22: Verschlusskappen-Depot
- 23: Endeffektor-Überwachungssensor
- 24: Notausschalter
- 25: Bildschirm
- 26: Schubladentisch
- 27: Haltemagnet
- 28: Präsenzsensor
- 29: Ausgleichsröhrchen-Depot

## Patentansprüche

1. Übergabestation einer Laboranlage zur automatisierten labormedizinischen Probenanalyse, wobei die Laboranlage mindestens einen Analyse-Vollautomaten zur Probenanalyse von Patientenproben sowie mindestens einen Industrieroboter (21) zur Probenhandhabung der Patientenproben beinhaltet, wobei die Patientenproben in die Analyse-Vollautomaten in automatenspezifischen, mittels des Industrieroboters (21) handhabbaren Probenhaltern (11) einbringbar sind, und wobei die automatenspezifischen Probenhalter (11) zur positionsdefinierten Aufnahme einer oder mehrerer der Patientenproben ausgebildet sind,
wobei die Übergabestation aufweist:
- einen zugangs- und zugriffsbeschränkten Schutzbereich (1), der einen Teil eines zugangs- und zugriffsbeschränkten Prüfbereichs der Laboranlage bildet, sowie
- einen an den Schutzbereich (1) angrenzenden Bedienerbereich (2) zum manuellen Einschleusen der Patientenproben in die Laboranlage, wobei jede der einzuschleusenden Patientenproben ein mit einem Datenetikett versehenes und mit einem Verschluss verschlossenes Probenbehältnis umfasst, das von einem Patienten stammendes flüssiges Untersuchungsmaterial enthält,
**dadurch gekennzeichnet, dass**
- die Übergabestation als Labormöbel ausgebildet ist, das eine verkleidete Trägerstruktur (3) aufweist, die im Bedienerbereich (2) eine umhauste Bedienerkammer (4) ausbildet, wobei die Bedienerkammer (4) eine durch ein Lichtgitter (17) überwachte Eingriffsöffnung (4.1) für das manuelle Einschleusen der Patientenproben durch Laborpersonal sowie eine Durchtrittsöffnung (4.2) am Übergang des Bedienerbereichs (2) zum Schutzbereich (1) der Übergabestation aufweist, und wobei innerhalb der Bedienerkammer (4) mindestens ein Probeneingabe-Depot (6) angeordnet ist, das mehrere Probenaufnahmen zur Aufnahme der manuell eingeschleusten Patientenproben aufweist,
- die Übergabestation im Schutzbereich (1) ein oder mehrere durch die Trägerstruktur (3) getragene Prüfproben-Depots (10) umfasst, wobei jedes der Prüfproben-Depots (10) eine Probenhalterfassung (12) zur positionsdefinierten Aufnahme eines der automatenspezifischen Probenhalter (11) aufweist,
- die Übergabestation im Schutzbereich (1) eine Verschlussentfernervorrichtung (13) zum automatisierten Entfernen des Verschlusses vom Probenbehältnis der Patientenproben aufweist, und
- die Übergabestation mindestens eine Bilderfassungseinheit (15) zur Bilderfassung der Probenbehältnisse der Patientenproben, einen Etikettenleser (16) zum Auslesen des Datenetiketts der Patientenproben sowie eine mit der Bilderfassungseinheit (15) und dem Etikettenleser (16) verbundene Datenverarbeitungseinheit (18) zur bildanalysegestützten Fehlerprüfung der mittels der Bilderfassungseinheit (15) erfassten Bilder der Probenbehältnisse der Patientenproben und zur Verarbeitung der vom Datenetikett mittels des Etikettenlesers (16) ausgelesenen Probeninformationen aufweist.

2. Übergabestation nach Anspruch 1, **dadurch gekennzeichnet, dass** die Übergabestation ferner den oder einen der Industrieroboter (21) der Laboranlage sowie eine mit der Datenverarbeitungseinheit (18) verbundene Steuerungseinrichtung zur Steuerung dieses Industrieroboters (21) umfasst, wobei dieser eingerichtet ist:
- die Patientenproben automatisiert aus dem Probeneingabe-Depot (6) zu entnehmen,
- die Patientenproben zum Auslesen des jeweiligen Datenetiketts automatisiert zum Etikettenleser (16) zu transferieren,
- die Patientenproben zur Bilderfassung der jeweiligen Patientenprobe automatisiert zur Bilderfassungseinheit (15) zu transferieren,
- die Patientenproben zum automatisierten Entfernen des Verschlusses zur Verschlussentfernervorrichtung (13) zu transferieren,
- die Patientenproben nach dem Entfernen des Verschlusses positionsdefiniert automatisiert in einen der in einer der Prüfproben-Depots (10) befindlichen automatenspezifischen Probenhalter (11) einzusetzen,
wobei die Steuerungseinrichtung das positionsdefinierte Einsetzen der Patientenproben in die automatenspezifischen Probenhalter (11) mittels Industrieroboters (21) in Abhängigkeit vom Prüfergebnis der bildanalysegestützten Fehlerprüfung sowie den aus dem Datenetikett ausgelesenen Probeninformationen steuert.

3. Übergabestation nach Anspruch 1 oder 2, **dadurch gekennzeichnet, dass** die Übergabestation eine in die Trägerstruktur (3) integrierte Zentrifuge (20) zum Zentrifugieren der Patientenproben aufweist, wobei die Zentrifuge (20) eine innerhalb des Schutzbereichs (1) der Übergabestation angeordnete Beladungsöffnung (20.1) aufweist, über die mittels des Industrieroboters (21) die Patientenproben in die Zentrifuge (20) automatisiert einbringbar und aus dieser automatisiert entnehmbar sind.

4. Übergabestation nach einem der Ansprüche 1 bis 3, **dadurch gekennzeichnet, dass** diese ein Fehlproben-Depot (7) mit mehreren Probenaufnahmen zur Aufnahme fehlerbehafteter Patientenproben aufweist, wobei das Fehlproben-Depot (7) so im Übergang vom Schutzbereich (1) zum Bedienerbereich (2) angeordnet ist, dass mittels des Industrieroboters (21) fehlerbehaftete Patientenproben in die Probenaufnahmen des Fehlproben-Depots (7) automatisiert einsetzbar und vom Laborpersonal aus dem Fehlproben-Depot (7) manuell entnehmbar sind.

5. Übergabestation nach einem der Ansprüche 1 bis 4, **dadurch gekennzeichnet, dass** diese ein Puffer-Depot (8) mit mehreren Probenaufnahmen zur Aufnahme der Patientenproben aufweist, wobei das Puffer-Depot (8) im Schutzbereich (1) angeordnet ist, wobei mittels des Industrieroboters (21) Patientenproben zu deren Zwischenlagerung in die Probenaufnahmen des Puffer-Depots (8) positionsdefiniert, automatisiert einsetzbar und aus diesen automatisiert entnehmbar sind.

6. Übergabestation nach einem der Ansprüche 1 bis 5, **dadurch gekennzeichnet, dass** diese eine Kamera aufweist, die gleichzeitig den Etikettenleser (16) zum Auslesen der Datenetiketten und die Bilderfassungseinheit (15) zur Bilderfassung der Patientenproben bildet.

7. Übergabestation nach einem der Ansprüche 1 bis 6, **dadurch gekennzeichnet, dass** die verkleidete Trägerstruktur (3) ein aus Konstruktionsprofilelementen (3.1) aufgebautes Gestell umfasst, wobei als Verkleidung (3.3) plattenförmige Verkleidungselemente am Gestell angebracht sind.

8. Übergabestation nach einem der Ansprüche 1 bis 7, **dadurch gekennzeichnet, dass** die Trägerstruktur (3) eine oder mehrere Arbeitsplatten (3.2) umfasst, die innerhalb der Bedienerkammer (4) und dem daran angrenzenden Teil des Schutzbereichs (1) eine ebene Tischfläche ausbilden.

9. Übergabestation nach Anspruch 8, **dadurch gekennzeichnet, dass** im Bereich der Durchtrittsöffnung (4.2) der Bedienerkammer (4) eine auf der Tischfläche aufsitzende, brüstungsartig ausgebildete Durchtrittsbarriere (5) ausgebildet ist, die den Durchtritt vom Bedienerbereich (2) in den Schutzbereich (1) in Tischflächennähe verhindert.

10. Übergabestation nach einem der Ansprüche 1 bis 9, **dadurch gekennzeichnet, dass** die Probenhalterfassung (12) eines oder mehrerer der Prüfproben-Depots (10) einen Präsenzsensor (28) zur Detektion der Präsenz des Probenhalters (11) in der Probenhalterfassung (12) aufweist.

11. Übergabestation nach einem der Ansprüche 1 bis 10, **dadurch gekennzeichnet, dass** die Probenhalterfassung (12) mindestens einen Haltemagnet (27) zur magnetischen Halterung des in die Probenhalterfassung (12) eingesetzten Probenhalters (11) aufweist.

12. Laboranlage zur automatisierten labormedizinischen Probenanalyse, **dadurch gekennzeichnet, dass** diese eine Übergabestation nach einem der Ansprüche 1 bis 11 aufweist.
